# EUROPEAN PATENT APPLICATION

(11) **EP 1 555 302 A1**
(43) Date of publication of application: **20.07.2005**
(21) Application number: 03756692.4
(22) Date of filing: 17.10.2003
(51) Int. Cl.: C09J 7/02

(54) **SHEET MATERIAL WITH HIGH DUCTILITY AND METHOD OF PRODUCING THE SAME**

(30) Priority: 23.10.2002 JP 2002308435
(71) Applicant: Hasepro, Inc., Osaka-shi, Osaka 547-0001 (JP)
(72) Inventor: HASEGAWA, Houtetsu, Osaka-shi, Osaka 547-0001 (JP); HASEGAWA, Tomohide, Osaka-shi, Osaka 547-0001 (JP)
(74) Representative: Sajda, Wolf E., Dipl.-Phys.
(86) International application number: PCT/JP2003/013340
(87) International publication number: WO 2004/037938

(57) **Abstract**

High stretchable sheet material according to the invention is adapted to maintain the flexibility of an ink applied to a base over an extended period of time, so that the sheet material may be even stuck on a curved portion, which increases the stretch ratio of the base, without suffering the degradation of the color or glossy appearance thereof. The high stretchable sheet material of the invention is arranged such that a binding/reinforcing layer (3) is formed on a back side of a base (2) formed of a synthetic resin sheet by impregnating a binder into the base (2), the binder including an ink (11) exhibiting a high flexibility in a dry state, and that a back side of the binding/ reinforcing layer (3) is covered by an adhesive layer (6) and a separator sheet (7) adhered to a back side of the adhesive layer.

## Description

### Technical Field

The present invention relates to a high stretchable sheet material and a method for manufacturing the same.

### Background Art

Recently, it has been a general practice to change the design or color of the surface of a mobile device such as a cellular telephone and PHS in a desired manner in order that an owner of the device may differentiate the device from those of the other owners by expressing personal characteristics of the owner. Vinyl chloride-based resin film (marking films) products having high stretchability have been marketed as a tool for changing the visual appearances of such mobile devices. There is a practice where the owners or dealers of the mobile devices purchase such film products so as to stick them on the overall outside surfaces of the devices or on the front faces thereof.

However, when applied to a small article including many curved portions of small curvature radii, such as a cellular telephone, a common marking film product must be stuck thereon as being slowly and carefully stretched with proper heat using a heating apparatus such as a dryer in order to obviate cracking. The sticking operation requires a high level skill and a long span of concentration to retain greatest attention to the film. It is never easy for general amateurs to accomplish neat finish.

In this connection, a high stretchable sheet material has already been proposed which permits any person to easily and neatly stick the material on a small object having many curved portions of small curvature radii. Such a high stretchable sheet material is characterized by impregnating, in a solvent-like manner, a binder into a marking film base, the binder including an ink exhibiting a high flexibility in a dry state (see Japanese Unexamined Patent Publication No.2000-326618 (refer to Claim 1 and Claim 8 thereof, in particular)).

In the above conventional high stretchable sheet material, the ink having the high flexibility is applied to a surface of the marking film base by screen printing, thereby forming, on the surface of the base, a binding/reinforcing layer, a pattern layer and a coat layer which are formed of the inks. After the lapse of a long period of time after manufacturing, therefore, a solvent component of the inks forming these layers will be gradually released by evaporation, thus leading to a possibility that the inks are decreased in the flexibility.

Hence, the following problem may be encountered when the conventional high stretchable sheet material is stuck on a cellular telephone or the like. Particularly at a curved portion of a small curvature radius where the base is stretched at a relatively great stretch ratio, the ink forming the binding/reinforcing layer as impregnated into the base or the ink forming the pattern layer cannot conform to the elongated/ deformed base. Consequently, the sheet material may sometimes suffer a lowered chroma from that of an original color or a degraded glossy appearance.

In view of the foregoing problem, it is an object of the present invention to provide a high stretchable sheet material and a method for manufacturing such a high stretchable sheet material, the sheet material adapted to maintain the flexibility of the ink applied to the base over an extended period of time so that the sheet material may be even stuck on the curved portion, which increases the stretch ratio of the base, without suffering the degradation of the color or glossy appearance thereof.

### Disclosure of the Invention

For achieving the above object, the present invention has taken the following technical approach.

That is, the high stretchable sheet material according to the present invention is characterized in that a binding/reinforcing layer is formed on a back side of a base formed of a synthetic resin sheet by impregnating a binder into the base, the binder including an ink exhibiting a high flexibility in a dry state, and that a back side of the binding/reinforcing layer is covered by an adhesive layer and a separator sheet adhered to a back side of the adhesive layer.

According to the present invention as described above, the binding/reinforcing layer is formed by impregnating the binder into the base, the binder including the ink exhibiting the high flexibility in the dry state. Therefore, the sheet material of the present invention may be easily and neatly stuck on a small article (such as a cellular telephone or mouse) which has many curved portions of small curvature radii.

According to the present invention, the back side of the binding/reinforcing layer is covered by the adhesive layer and the separator sheet and hence, the solvent component of the binding/reinforcing layer impregnated into the base is sealed in as substantially maintained in an as-manufactured state. Thus, the solvent component is prevented from evaporating out of the sheet material. After shipment of the high stretchable sheet material, therefore, the flexibility of the ink applied to the base is substantially maintained in the as-manufactured state over an extended period of time, so that the ink is capable of conforming to the base increased in the elongation deformation. Hence, the high stretchable sheet material may be even stuck on the curved portions, which increase the stretch ratio of the bases, without suffering the degradation of the color or glossy appearance thereof.

In the above present invention, a pattern layer including an ink exhibiting a high flexibility in a dry state may be interposed between the binding/reinforcing layer and the adhesive layer, so that the pattern layer may impart a variety of picture patterns and color tones to the high stretchable sheet material.

The above high stretchable sheet material wherein the base is formed with the binding/ reinforcing layer by impregnating the ink into the base may be manufactured, for example, using the screen printing technique.

That is, a method for manufacturing a high stretchable sheet material according to the present invention is characterized in that an ink exhibiting a high flexibility in a dry state is applied to a back side of a base formed of a synthetic resin sheet by way of screen printing with the setting of a mesh coarser than that specified by the standard for use of the ink (standard specification of the ink) and the applied ink is dried, and that an adhesive is applied to a back side of the base coated with the ink so as to stick a separator sheet on the base.

If the screen printing using the coarse mesh is performed on the base formed of the synthetic resin sheet, the amount of ink applied to the base is increased so much that the base is impregnated with the ink, the flexibility of which increases the elongation percentage of the base. Thus, the base is allowed to exhibit quite a high stretchability.

In a case where the high stretchable sheet material is formed with a pattern layer according to the above manufacturing method, the following procedure may be taken. After the aforesaid ink is dried, a different ink exhibiting a high flexibility in a dry state is applied to print a desired picture pattern on the back side of the base and is dried. Subsequently, the adhesive is applied to the back side of the base coated with the different ink so as to stick the separator sheet on the base.

On the other hand, if the flexible ink for forming the pattern layer is applied to the base after the ink impregnated into the base to form the binding/reinforcing layer and to increase the elongation percentage of the base is dried, as described above, the solvent in the ink impregnated into the base to form the binding/reinforcing layer causes the ink forming the pattern layer to blur so that a desired color tone or picture pattern may not be obtained.

Therefore, the pattern layer may previously be formed on the back side of the base and then, the binding/reinforcing layer may be formed on the back side of the pattern layer.

That is, a second high stretchable sheet material according to the present invention is characterized in that a pattern layer including an ink exhibiting a high flexibility in a dry state is formed on a back side of a base formed of a synthetic resin sheet; that a binding/reinforcing layer is formed on a back side of the pattern layer by impregnating a binder into the base from the back side of the pattern layer, the binder including an ink of the same type based on the same solvent as that of the ink exhibiting a high flexibility in a dry state and forming the pattern layer; and that a back side of the binding/reinforcing layer is covered by an adhesive layer and a separator sheet adhered to a back side of the adhesive layer.

In this case, the pattern layer is formed on the back side of the base before the ink (binder) for increasing the elongation percentage of the base is impregnated therein. Therefore, the ink forming the pattern layer does not blur during the formation of the pattern layer on the back side of the base. Furthermore, since the binding/reinforcing layer formed on the back side of the pattern layer includes the ink of the same type based on the same solvent as that of the ink forming the pattern layer, the solvent penetrates through the pattern layer to be impregnated into the base, thereby further increasing the elongation percentage of the base.

According to the second high stretchable sheet material, there may be provided a high stretchable sheet material offering a high elongation percentage without degrading the color tone of the pattern layer or the appearance of the picture pattern.

The second high stretchable sheet material wherein the binding/ reinforcing layer is formed on the back side of the pattern layer by impregnating the ink may also be manufactured using the screen printing technique, for example.

That is, a method for manufacturing the second high stretchable sheet material according to the present invention is characterized in that a desired picture pattern is formed on a back side of a base formed of a synthetic resin sheet, using an ink exhibiting a high flexibility in a dry state and then the ink is dried; that a different ink exhibiting a high flexibility in a dry state and based on the same solvent as that of the former ink is applied to a back side of the base coated with the former ink by way of screen printing with the setting of a mesh coarser than that specified by the standard for use of the latter ink and then the ink is dried; and that an adhesive is applied to the back side of the base coated with the latter ink so as to stick a separator sheet on the base.

### Brief Description of the Drawings

FIG. 1 is a sectional view showing a high stretchable sheet material according to the present invention;
FIG. 2 is a group of diagrams explanatory of the steps of manufacturing the sheet material, FIG. 2A representing a perspective view of a base and a plate, FIG. 2B representing a perspective view showing a step of forming a binding/ reinforcing layer;
FIG. 3 is a group of diagrams explanatory of the steps of manufacturing the sheet material, FIG. 3A representing a perspective view showing a drying step, FIG. 3B representing a perspective view showing a step of forming a pattern layer;
FIG. 4A is a side view showing an example of a screen printing press, whereas FIG. 4B is a front view showing an example of a heating apparatus;
FIG. 5A is a perspective view showing a state prior to the sticking of the high stretchable sheet material onto a laptop computer, whereas FIG. 5B is a perspective view showing a state where the high stretchable sheet material is stretched over a corner of the laptop computer;
FIG. 6 is a sectional view showing another high stretchable sheet material according to the present invention;
FIG. 7 is a group of diagrams explanatory of the steps of manufacturing the above sheet material, FIG. 7A representing a perspective view of a base and a plate, FIG. 7B representing a perspective view showing a step of forming a pattern layer; and
FIG. 8 is a group of diagrams explanatory of the steps of manufacturing the above sheet material, FIG. 8A representing a perspective view showing a drying step, FIG. 8B representing a perspective view showing a step of forming a binding/ reinforcing layer.

### Best Modes for Carrying Out the Invention

Best modes for carrying out the present invention will be described hereinafter with reference to the accompanying drawings.

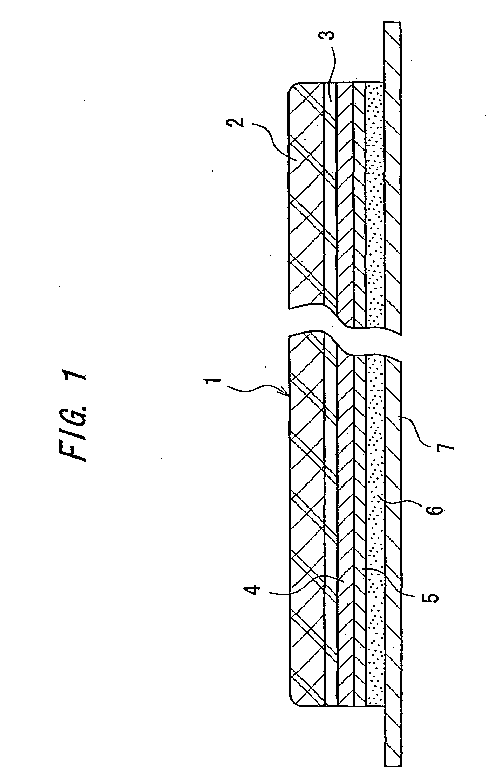

FIG. 1 shows a high stretchable sheet material 1 according to one embodiment of the present invention.

The high stretchable sheet material 1 includes: a base 2 formed of a synthetic resin sheet; a binding/ reinforcing layer 3 formed on a back side (the lower side as seen in FIG. 1) of the base 2 by impregnating, in a solvent-like manner, a binder into a partial thickness region or the overall thickness region of the base; a pattern layer 4 formed on a back side of the binding/reinforcing layer 3; a coat layer 5 formed on a back side of the pattern layer 4; an adhesive layer 6 formed on a back side of the coat layer 5; and a separator sheet 7 adhered to a back side of the adhesive layer 6.

The illustrated binding/reinforcing layer 3 is in a state where the binder is impregnated into the overall thickness of the base 2 and is further protruded outward from the back side of the base 2. The separator sheet 7 is adhered to the back side of the adhesive layer 6. The separator sheet 7 prevents the adhesion of dusts and the like to the adhesive layer 6 till the time of use (sticking) of the high stretchable sheet material 1. Furthermore, the adhesive layer 6 and the separator sheet 7 cover the binding/reinforcing layer 3, the pattern layer 4 and the coat layer 5 on the back sides thereof, thereby preventing the solvent component in these layers 3, 4, 5 from evaporating out of these layers.

The base 2 accounts for a base sheet portion of a marking film (a sheet portion exclusive of the adhesive on the back side of the film). Such a marking film is marketed as a film product which itself has excellent stretchability and tensile strength. Examples of the marking film having the base sheet portion usable in the present invention include: "Modecal", "Fuji Paint" and "Easy Tack" (trade names) as well as "Lumiluster" and "Reflective Sheet" (trade names) commercially available from Lintec Corporation; "Tack Paint" (trade name) commercially available from Sekisui Chemical Co., Ltd.; "DYNACAL" (trade name) commercially available from TOYO CO., Ltd; and the like.

The properties of some of the exemplified products are as follows. In a case where the thickness is 75 to 85 µm, the above "Modecal" exhibits an elongation of 100% or more and a tensile strength of 1.0 kg/10 mm. As to heat resistance, no failure is observed after 168-hour heating at 80°C.

Having a thickness of 130 µm (50 µm of which is the base portion), the above "Fuji Paint" exhibits an elongation of 60% or more with respect to each of the longitudinal and transverse directions, and a tensile strength of 2.0 kg or more with respect to each of the longitudinal and transverse directions. As to the heat resistance, no failure is observed after 240-hour heating at 70°C.

Having a thickness of 135 µm (50 µm of which is the base portion), the above "Easy Tack" exhibits an elongation of 60% or more with respect to each of the longitudinal and transverse directions, and a tensile strength of 2.0 kg or more with respect to each of the longitudinal and transverse directions. As to the heat resistance, no failure is observed after 240-hour heating at 70°C.

Also in a case where a commercially available marking film is used alone, the film having such properties is able to accomplish flexible and conformable sticking on an object so long as the object has a curved surface of a relatively large curvature radius, such as a surface of an automotive body. However, according to the results of experimental use of the marking film alone, the test conducted by the present inventors, the above curvature radius of the curved surface is roughly the lowest limit that allows the use of the film without the need for heating.

The binder used for forming the binding/reinforcing layer 3 includes an ink exhibiting a high flexibility in a dry state. The binder employs an ink having a good affinity for the base 2 formed of a synthetic resin sheet such as of vinyl chloride. Such a binder produces a solvent-like bonding state as impregnated into the base 2. As a result, the base 2 is dramatically enhanced in the stretchability and the tensile strength.

The binder effective to increase the elongation percentage of the vinyl chloride base 2 as impregnated therein includes, for example, "Sericol SP2100 AU-Cleat" (trade name, otherwise known as a screen printing overcoat clear of Sericol VKT Ink series) commercially available from Teikoku Printing Inks Mfg. Co., Ltd., and the like. Other usable inks include: "Sericol EG Screen Ink" (trade name, otherwise known as a gloss ink for polyester); "SG700 series" inks (trade name) commercially available from Seiko Advance Ltd.; and the like.

The properties of the above "Sericol SP2100 AU-Clear" are as follows. The ink exhibits an elongation of 180% as stretched at a rate of 200 mm/min and a tensile strength of 2.0 kg/ 15 mm as stretched at the same rate as the above. As to the heat resistance, no failure is observed after 168-hour heating at 80°C.

Accordingly, the binding/reinforcing layer 3 with the above binder impregnated into the base 2 has such a high stretchability (a property to exhibit an extremely high degree of elongation under conditions where defects including cracks and the like do not occur) that even when the sheet material is stuck on a small article having many curved portions of small curvature radii, such as a cellular telephone or a mouse of a personal computer, the sheet material provides neat finish with ease.

The pattern layer 4 and the coat layer 5 may employ an ink which has similar composition to that of the binder used in the binding/ reinforcing layer 3 but has a different color or a clear color. Otherwise, a suitable ink may be selected from those normally used in the screen printing.

An acrylic adhesive of organic solvent type, for example, may preferably be used as the adhesive for forming the adhesive layer 6 because the adhesive serves a packing function to prevent the solvent component from evaporating from the binding/reinforcing layer 3, the pattern layer 4 and the coat layer 5.

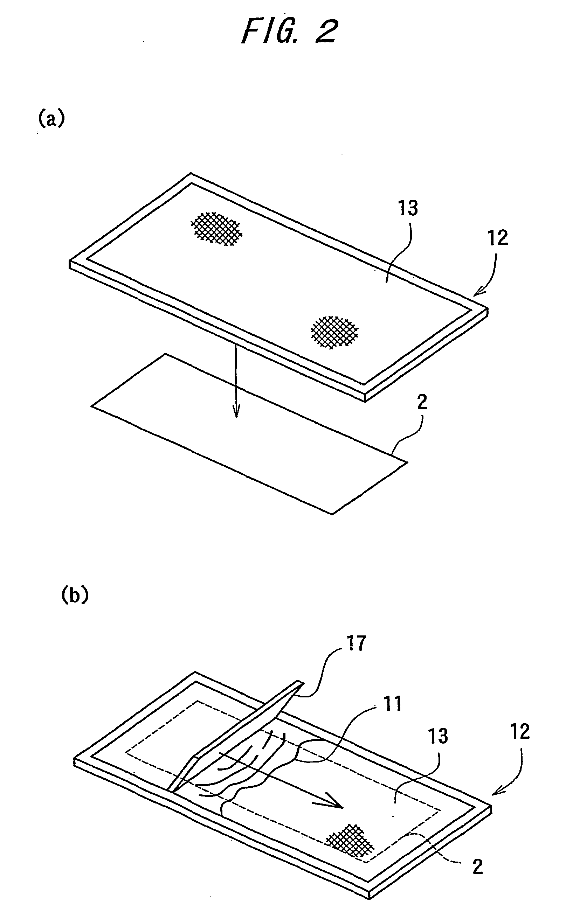

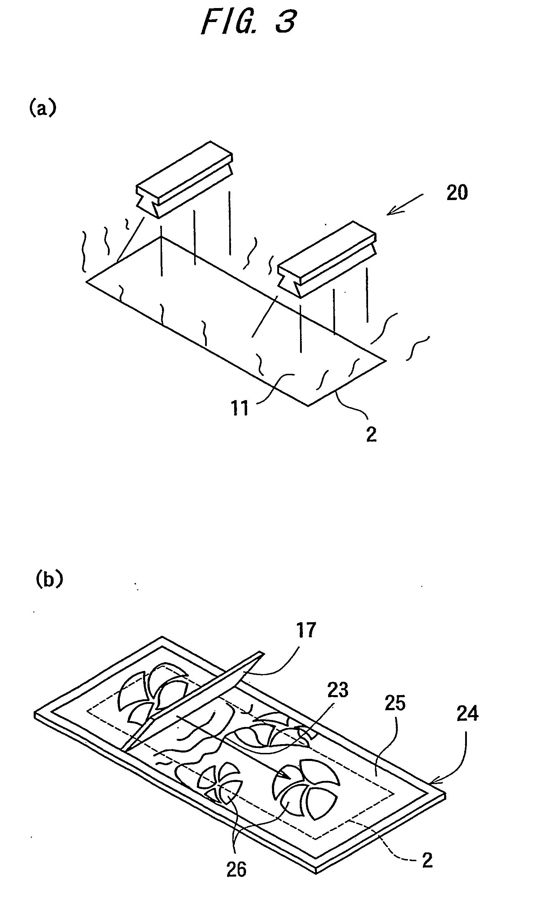

Next, a method for manufacturing the high stretchable sheet material 1 according to one embodiment of the present invention will be described with reference to FIG. 2 and FIG. 3.

First, as shown in FIG. 2, the ink 11 exhibiting a high flexibility in a dry state is applied to one side of the base 2 by screen printing. A plate 12 used by the screen printing process includes a screen 13 having a mesh coarser than that specified by the standard for use of the ink 11.

In the case of the above "Sericol SP2100 AU-Clear", for example, the standard for use thereof specifies a proper mesh to be in the range of 180 to 225. In the case of the "Sericol EG Screen Ink", the standard for use thereof specifies a proper mesh to be on the order of 230. The embodiment specifies a proper mesh for the screen 13 of the plate 12 to be 120, which is nearly twice as coarse as specified by the standard for use of this ink.

By using such a coarse screen 13, a substantially large amount of ink 11 is supplied onto the base 2. As a result, a sufficient amount of ink 11 is assuredly impregnated into the base 2.

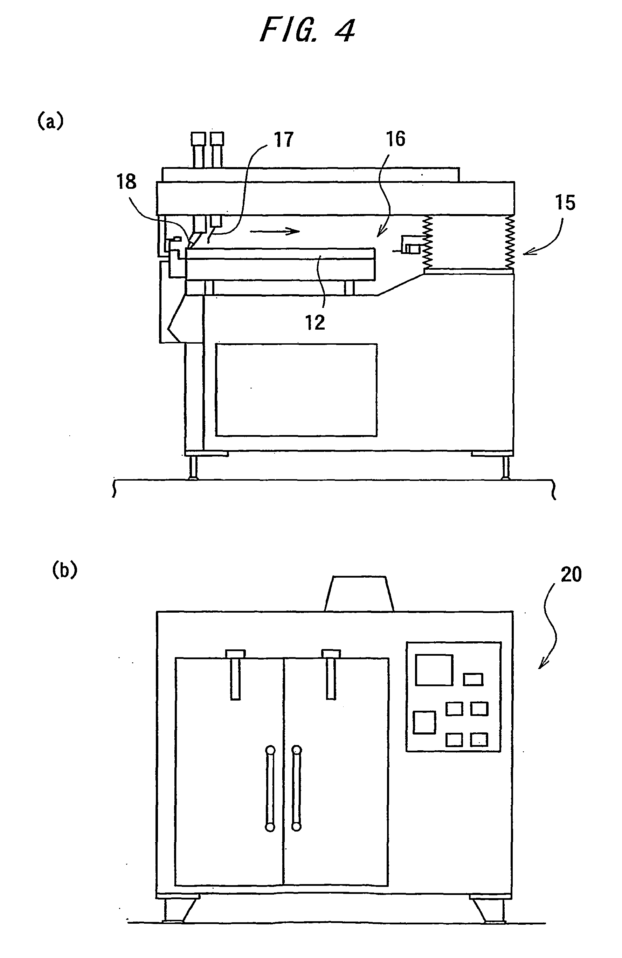

FIG. 4A shows an example of a screen printing press 15 used for this screen printing process. The printing press 15 has a structure wherein a plate-12 setting portion 16 is located centrally of the press while a doctor blade 17 and a squeegee 18 are adapted to move over the plate 12. The plate 12 includes a tetron screen 13.

The application of the ink 11 is followed by the curing of the ink 11, which is performed for a predetermined period of time to allow the ink 11 to dry. The drying process may employ a suitable heating apparatus 20 for heating the ink, as shown in FIG. 3.

FIG. 4B shows an exemplary outside appearance of the heating apparatus 20. The heating apparatus incorporates therein a thermostatic oven with internal air circulation (not shown). However, it is also possible to use a heating apparatus of another heating system. In this case, the heating temperature may preferably be in the range of 30°C or more to 80°C or less. The reason is as follows. If the temperature is lower than 30°C, the flexibility of the ink 11 may not be developed sufficiently. If the heating temperature exceeds 80°C, there is a possibility that the sheet material 1 so manufactured may suffer surging.

Even though the heating temperature is in the range of 30°C or more to 80°C or less, the following cases involve the following problems. If the heating temperature is less than 50°C, the drying time tends to be increased. If the heating temperature is in excess of 70°C, the sheet material 1 may suffer minor flaws, which occur rarely. Therefore, it is practically preferable that the heating temperature is in the range of 50°C or more to 70°C or less. The optimum heating conditions are a heating temperature of 60°C and a heating time of 15 minutes.

It is noted that all the specific examples of the base 2 of the marking film or of the ink 11 clear the heat resistance of 70°C. Some of the examples even clear the heat resistance of 80°C. Therefore, it is not difficult to obviate a problem that the base 2 and the ink 11 are damaged by the heat during the drying process.

After the ink 11 is dried, the base 2 with the ink 11 impregnated therein is set again in the screen printing press 15, where the same ink 11 is applied to the base 2 under the same conditions as the above, the ink 11 exhibiting a high flexibility in a dry state. Subsequently, the heating apparatus 20 is operated for drying the ink 11 under the same conditions as the above.

In this manner, the application and dry cycle for the same ink 11 having the excellent flexibility is repeated plural times, whereby the ink 11 is more assuredly impregnated into the base 2. It is thus ensured that an even greater amount of ink is applied to the base. As a result, the sheet material 1 having an even more excellent stretchability can be obtained.

It is noted, however, that the greater number of repetition of the application and dry cycle for the ink 11 does not necessarily lead to the better result. Three or more repetitions of the application and dry cycle do not result in a noticeable increase of the effect. This suggests that it is the most efficient to repeat the application and dry cycle for the ink 11 twice.

The base 2 formed with the binding/reinforcing layer 3 by repeating the application and dry cycle for the ink 11 in the aforementioned manner is further processed. As shown in FIG. 3B, the pattern layer 4 is formed on the back side of the binding/reinforcing layer 3.

The pattern layer 4 may be formed by the common screen printing method using the screen printing press 15 similar to the one shown in FIG. 4A.

Used as an ink 23 for the pattern layer 4 is one that exhibits, in a dry state, the same level of flexibility as that of the ink 11 for forming the binding/reinforcing layer 3 or has a certain level of flexibility which is higher than that of the ink 11. In a frame of a plate 24 employed by this screen printing process, a screen 25 is formed with a desired picture pattern 26 (which may be designed for homochromatic printing). Unlike the formation of the binding/reinforcing layer 3, the plate 24 may employ the screen having a mesh in the range of 230 to 300.

The screen printing process is followed by heated-air drying or natural seasoning of the ink. Subsequently, the coat layer 5 is formed on the back side of the pattern layer 4 if it is necessary. Except that a clear ink or a clear colored ink is used, the coat layer 5 is formed substantially the same way as the formation of the pattern layer 4 while the other properties of the used ink are the same as those of the ink used for forming the pattern layer. Otherwise, the coat layer may be formed by a conventionally known method in accordance with the used ink. Therefore, a detailed description of the formation of the coat layer is dispensed with.

The coat layer is required in a case where there is a strong demand for preventing the pattern layer 4 from being dissolved out or damaged in the course of manufacture. However, it is also possible to eliminate the necessity of the coat layer.

Subsequently, the adhesive is applied to the back side of the coat layer 5 by a conventionally known method (the application of the adhesive may also be performed in the aforesaid screen printing press 15). Thereafter, the separator sheet 7 is stuck on the back side of the adhesive layer 6 thus formed whereby the manufacture of the high stretchable sheet material 1 of the embodiment is completed.

It is preferred to perform the application of the adhesive within one hour or so after the coat layer 5 is dried. The reason is as follows. After the lapse of more than one hour from when the coat layer 5 is dried, an excessive amount of solvent component is allowed to evaporate from the binding/reinforcing layer 3, the pattern layer 4 and the coat layer 5 so that the inks 11, 23 may already be decreased in the flexibility when the sheet material is manufactured.

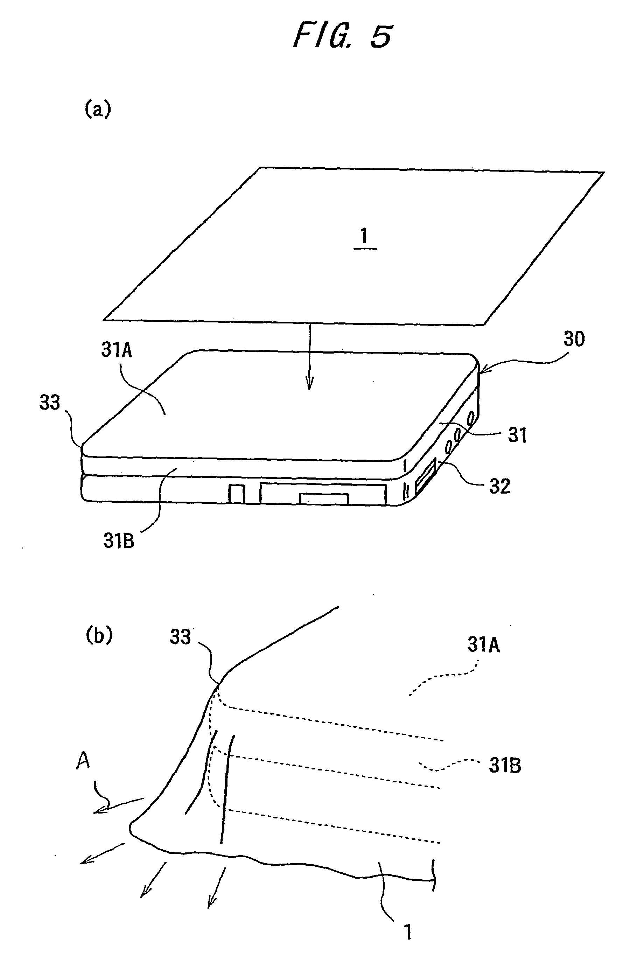

FIG. 5 illustrates an example of use wherein the high stretchable sheet material 1 of the embodiment manufactured in the aforementioned manner is stuck on a laptop computer 30.

As shown in FIG. 5A, the high stretchable sheet material 1 in this case is formed in a rectangular shape of a larger size than that of an outside circumferential shape of the laptop computer 30. The high stretchable sheet material 1 is stuck on a surface 31A of a cover member 31 of the computer 30.

Subsequently, the high stretchable sheet material 1 is drawn in directions of arrows A so as to be stretched along a corner of the cover member 31, as shown in FIG. 5B. Then, the sheet material 1 is sequentially stuck on a peripheral surface 31B of the cover member 31. The high stretchable sheet material 1 is cut along a contact surface with a computer body 32. Thus, the sheet material 1 may be stuck on the overall exposed surface of the cover member 31 without producing wrinkles.

According to the high stretchable sheet material 1 of the embodiment, the solvent component of the binding/reinforcing layer 3 that is impregnated into the base 2 is sealed in the sheet material as substantially maintained in an as-manufactured state because the back sides of the binding/reinforcing layer 3, the pattern layer 4 and the coat layer 5 are covered by the adhesive layer 6 and the separator sheet 7. Even in a case where a user actually sticks the high stretchable sheet material 1 on the laptop computer 30 as described above, the inks 11, 23 applied to the base 2 substantially maintains the as-manufactured flexibility over an extended period of time.

Accordingly, the high stretchable sheet material 1 of the embodiment permits the inks 11, 23 to properly conform to the base 2 increased in the elongation deformation. Hence, the high stretchable sheet material 1 can be stuck even on a curved portion 33, as shown in FIG. 5B for example, without suffering the degradation of the color or the glossy appearance thereof, the curved portion which increases the stretch ratio of the base 2.

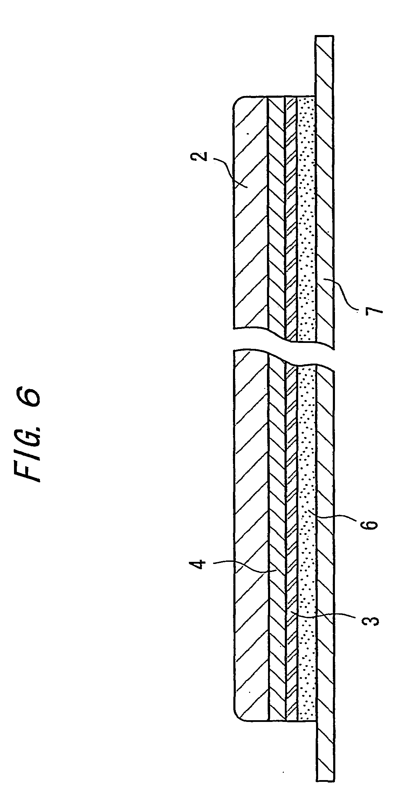

FIG. 6 shows a high stretchable sheet material 1 according to a second embodiment of the present invention.

The high stretchable sheet material 1 of this embodiment includes: a base 2 formed of a synthetic resin sheet; a pattern layer 4 formed on a part or the whole of the back side of the base 2 (the lower side as seen in FIG. 6); a binding/reinforcing layer 3 formed by impregnating, in a solvent-like manner, a binder into the pattern layer 4 from the back side thereof; an adhesive layer 6 formed on a back side of the binding/reinforcing layer 3; and a separator sheet 7 adhered to a back side of the adhesive layer 6.

While the binding/reinforcing layer 3 is formed by impregnating a binder (an ink serving to increase the elongation percentage of the base 2) into the base 2 via the pattern layer 4, the figure depicts the binding/reinforcing layer protruding outwardly of the back side of the pattern layer 4. The separator sheet 7 is adhered to the back side of the adhesive layer 6. The separator sheet 7 prevents the adhesion of dusts and the like to the adhesive layer 6 till the time of use (sticking) of the high stretchable sheet material 1. On the other hand, the adhesive layer 6 and the separator sheet 7 cover the back sides of the binding/reinforcing layer 3 and the pattern layer 4, thereby serving to prevent the solvent component in these layers 3, 4 from evaporating out of these layers.

The base 2 of this embodiment accounts for a base sheet portion of a marking film of a synthetic resin based on polyolefin. Examples of this marking film include L-Round Series (trade name) commercially available from Lintec Corporation. Examples of the binder for increasing the elongation percentage of the polyolefin base 2 as impregnated therein include EG Screen Ink (trade name) commercially available from Teikoku Printing Inks Mfg. Co., Ltd.

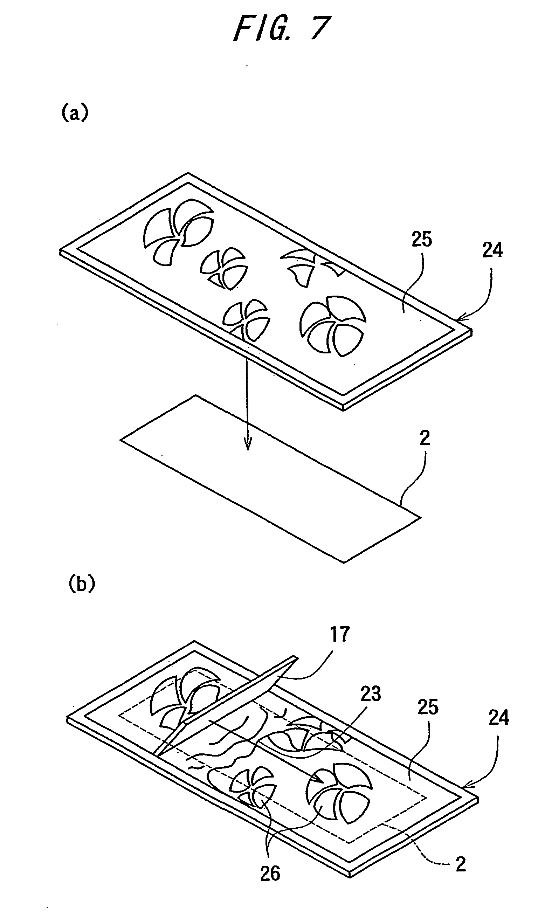

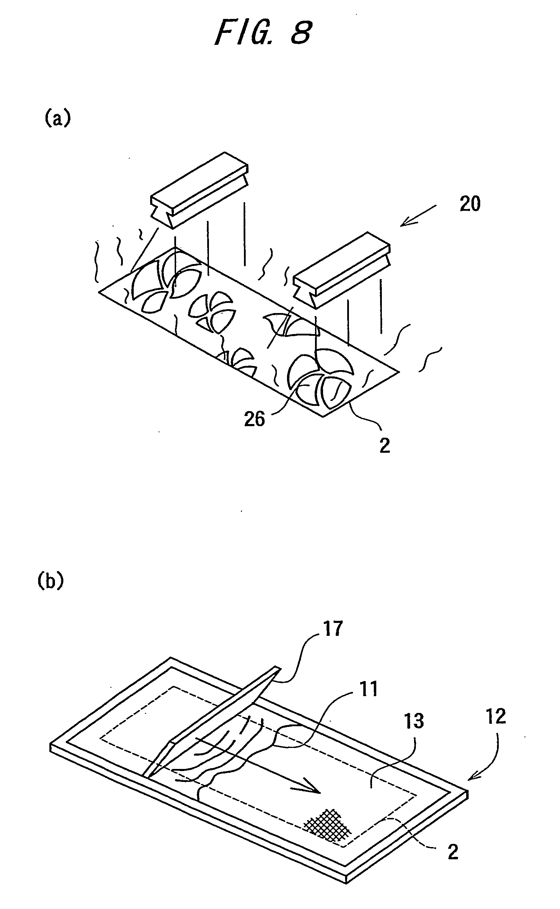

Next referring to FIG. 7 and FIG. 8, description is made on a method for manufacturing the high stretchable sheet material 1 according to the second embodiment of the present invention.

First, as shown in FIG. 7, the ink 23 exhibiting a high flexibility in a dry state is applied to one side of the above base 2 by performing the screen printing according to the conventionally known method. Thus, the desired picture pattern 26 is printed on the base 2.

Used as the ink 23 for forming such a pattern layer 4 is one that exhibits, in a dry state, the same level of flexibility as that of the ink 11 for forming the binding/ reinforcing layer 3 or has a certain level of flexibility which is higher than that of the ink 11. In the frame of the plate 24 employed by this screen printing process, the screen 25 is formed with the desired picture pattern 26 (which may be designed for homochromatic printing). Unlike the formation of the binding/reinforcing layer 3 to be described hereinafter, the plate may employ the screen having a mesh in the range of 230 to 300.

After such a screen printing process, the ink may be dried by means of the heating apparatus 20 as shown in FIG. 8A, or may be allowed to dry naturally. Subsequently, as shown in FIG. 8B, the aforesaid ink 11 exhibiting a high flexibility in a dry state is applied to the back side of the pattern layer 4 by screen printing. The ink 11 used in this case is the same type of ink based on the same solvent as the ink 23 for forming the aforesaid picture pattern 26. The plate 12 used by the screen printing process includes the screen 13 having a mesh coarser than that specified by the standard for use of the ink 11. For instance, the mesh is nearly twice as coarse as specified by the standard for use of the ink.

By using such a coarse screen 13, a substantially large amount of ink 11 (binder) is supplied to the pattern layer 4 on the base 2. As a result, a sufficient amount of ink 11 is allowed to impregnate into the base 2 through the pattern layer 4.

Subsequently, the adhesive is applied to the back side of the binding/ reinforcing layer 3 by the conventionally known method (the application of the adhesive may also be performed in the aforesaid screen printing press 15). Thereafter, the separator sheet 7 is stuck on the back side of the adhesive layer 6 thus formed, whereby the manufacture of the high stretchable sheet material 1 of the second embodiment is completed.

According to the high stretchable sheet material 1 of the second embodiment as described above, the pattern layer 4 is previously formed on the back side of the base 2 before the ink 11 (binder) for increasing the elongation percentage of the base is impregnated therein. Therefore, the ink 23 is prevented from blurring when the picture pattern 26 is printed on the back side of the base 2. In addition, the binding/reinforcing layer 3 formed on the back side of the pattern layer 4 includes the ink 11 of the same type based on the same solvent as that of the ink 23 forming the pattern layer 4 and hence, the solvent penetrates through the pattern layer 4 to be impregnated into the base 2, thereby increasing the elongation percentage of the base 2. Accordingly, there may be obtained the high stretchable sheet material 1 achieving the high elongation percentage without degrading the color tone of the pattern layer or the appearance of the picture pattern.

It is noted that the present invention is not limited to the foregoing embodiments.

For instance, the high stretchable sheet material 1 according to the present invention may be used as stuck not only on the laptop computer 30 but also on any kind of articles including portable articles such as cellular telephones, pocket pagers, CD players and MD players; vehicle bodies such as of automobiles, motor cycles and bicycles and all kinds of automotive parts such as rear-view mirror bodies; stationary articles and articles for daily use; domestic articles such as carved ornaments; and the like.

Furthermore, other usage purposes are not limited, which include expression of individual characters; so-called reorganization of a room; patch-up or coverage of a defaced portion or damaged portion; attachment of an emblem; and the like.

As described above, the present invention is adapted to maintain the flexibility of the ink applied to the base over an extended period of time so that the high stretchable sheet material may be stuck even on a curved portion, which increases the stretch ratio of the base, without suffering the degradation of the color or glossy appearance thereof.

### Industrial Application

The high stretchable sheet material of the present invention may be used as stuck on portable articles such as laptop computers, cellular telephones, pocket pagers, CD players and MD players; vehicle bodies such as of automobiles, motor cycles and bicycles and automotive parts.

## Claims

1. A high stretchable sheet material **characterized in that** a binding/reinforcing layer 3 is formed on a back side of a base 2 formed of a synthetic resin sheet by impregnating a binder into the base 2, the binder comprising an ink 11 exhibiting a high flexibility in a dry state, and that a back side of the binding/ reinforcing layer 3 is covered by an adhesive layer 6 and a separator sheet 7 adhered to a back side of the adhesive layer.

2. The high stretchable sheet material according to Claim 1, wherein a pattern layer 4 comprising an ink 23 exhibiting a high flexibility in a dry state is interposed between the binding/reinforcing layer 3 and the adhesive layer 6.

3. A method for manufacturing a high stretchable sheet material **characterized in that** an ink 11 exhibiting a high flexibility in a dry state is applied to a back side of a base 2 formed of a synthetic resin sheet by screen printing with a setting of a mesh coarser than that specified by the standard for use of the ink, and then the ink is dried; and that an adhesive is applied to a back side of the base 2 coated with the ink 11 so as to stick a separator sheet 7 on the base.

4. The method for manufacturing the high stretchable sheet material according to Claim 3, wherein after the ink 11 is dried, a different ink 23 exhibiting a high flexibility in a dry state is applied to print a desired picture pattern 26 on the back side of the base 2 and is dried, and that the adhesive is applied to the back side of the base 2 coated with the different ink 23 so as to stick the separator sheet 7 on the base 2.

5. A high stretchable sheet material **characterized in that** a pattern layer 4 comprising an ink 23 exhibiting a high flexibility in a dry state is formed on a back side of a base 2 formed of a synthetic resin sheet; that a binding/reinforcing layer 3 is formed on a back side of the pattern layer 4 by impregnating a binder into the base 2 from the back side of the pattern layer 4, the binder comprising an ink 11 of the same type based on the same solvent as that of the ink 23 forming the pattern layer 4, the ink exhibiting a high flexibility in a dry state; and that a back side of the binding/reinforcing layer 3 is covered by an adhesive layer 6 and a separator sheet 7 adhered to a back side of the adhesive layer.

6. A method for manufacturing a high stretchable sheet material **characterized in that** a desired picture pattern 26 is formed on a back side of a base 2 formed of a synthetic resin sheet using an ink 23 exhibiting a high flexibility in a dry state and then the ink is dried; that a different ink 11 exhibiting a high flexibility in a dry state and based on the same solvent as that of the ink 23 is applied to a back side of the base 2 coated with the ink 23 by screen printing with a setting of a mesh coarser than that specified by the standard for use of the ink 11 and then the ink 11 is dried; and that an adhesive is applied to the back side of the base 2 coated with the different ink 11 so as to stick a separator sheet 7 on the base 2.
